# EUROPÄISCHE PATENTSCHRIFT

(11) **EP 0 911 502 B1**
(45) Veröffentlichungstag und Bekanntmachung des Hinweises auf die Patenterteilung: **11.07.2001**
(21) Anmeldenummer: 98890296.1
(22) Anmeldetag: 13.10.1998
(51) Int. Cl.: F02B 31/08, F02B 17/00, F02M 25/07, F02M 35/104

(54) **Fremdgezündete Brennkraftmaschine**
Spark-ignited combustion engine
Moteur à combustion à allumage commandé

(30) Priorität: 21.10.1997 AT 64997 U
(43) Veröffentlichungstag der Anmeldung: 28.04.1999
(73) Patentinhaber: AVL List GmbH, 8020 Graz (AT)
(72) Erfinder: Kapus, Paul, Dr., 8045 Graz (AT)
(74) Vertreter: Babeluk, Michael, Dipl.-Ing. Mag.

(56) Entgegenhaltungen:
- EP-A- 0 221 312
- EP-A- 0 764 773
- AT-B- 402 535
- DE-A- 3 033 679
- DE-A- 3 828 742
- FR-A- 2 685 382
- GB-A- 2 218 152
- US-A- 4 104 989
- US-A- 4 135 481
- US-A- 4 196 701
- US-A- 4 261 316
- US-A- 4 276 862
- US-A- 4 825 843
- US-A- 5 443 547

## Beschreibung

Die Erfindung betrifft eine Fremdgezündete Brennkraftmaschine mit mehreren Zylindern, mit einem Auslasssystem und einem Einlasssystem mit mindestens einem von einem Einlasssammler ausgehenden Einlasskanal pro Zylinder, und einer Einrichtung zur Ladungsverdünnung mit zumindest einer zum Einlasssystem führenden Zuführleitung für Luft und/oder rückgeführtes Abgas, wobei die Einrichtung zur Ladungsverdünnung eine für alle Zylinder einer Reihe gemeinsame Verteilerleiste aufweist, in welche die Zuführleitung, vorzugsweise etwa mittig, einmündet und welche über zumindest einen Verteilerkanal pro Zylinder mit dem Einlasskanal strömungsverbindbar ist, wobei der Verteilerkanal eine Drossel mit vordefinierten Strömungsquerschnitt aufweist.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber z.B. Dieselmotoren höheren spezifischen Kraftstoffverbrauch einer fremdgezündeten Brennkraftmaschine liegt in der Betriebsweise mit vorgemischtem homogenen Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25 % geschätzt werden. Ein Teil dieses Verbesserungspotentials kann genutzt werden, wenn im Teillastbereich eine Verringerung der Drosselung möglich wird. Bei gegebener Kraftstoffmenge ist dies jedoch nur durch eine Abmagerung des Gemisches durch Luftzuführung oder durch Rückführung von Abgas (AGR) mittels einer Einrichtung zur Ladungsverdünnung möglich. Durch die Zuführung von Luft kann die Brennkraftmaschine im Magerbetrieb betrieben werden. Bei Abgasrückführung dagegen stellt das Abgas eine inerte Gemischkomponente dar und ermöglicht den Betrieb bei λ=1. Um die Drosselverluste im Teillastbereich zu vermindern sind also Maßnahmen erforderlich, die die Abmagerungsfähigkeit bzw. AGR-Verträglichkeit des Motors erhöhen bei gleichzeitiger Beibehaltung oder Verringerung der Emissionswerte.

Durch eine Gemischschichtung, bei der an der Zylinderwand vorwiegend reine Luft (bei Luftzuführung) bzw. Abgas (bei AGR) und in Zündkerzennähe vorwiegend fettes Gemisch bzw. Frischgas ist, entsteht im Zylinder insgesamt ein magereres Gemisch bzw. eine höhere Abgasrückführrate und damit eine stärkere Entdrosselung als in Zündkerzennähe. Nun wird aber durch Abmagerung bzw. Abgasrückführung die Verbrennung verlangsamt, was erstens zu einem niedrigeren thermodynamischen Wirkungsgrad und andererseits, wegen der niedrigeren Verbrennungstemperatur, zu einer höheren Emission von unverbrannten Kohlenwasserstoffen führt. Diesem Trend wird durch die Schichtung entgegengewirkt.

Eine Brennkraftmaschine mit mindestens zwei Einlassventilen bietet die Möglichkeit, dem Brennraum über getrennte Einlasskanäle unterschiedliche Gemischzusammensetzungen zuzuführen. Die Strömung im Zylinderraum kann mit Hilfe der Gestaltung der Einlassorgane des Motors derart beeinflusst werden, dass sich zum Zündzeitpunkt ein in der gewünschten Weise geschichtetes Gemisch im Zylinder befindet. Hierbei ist es besonders vorteilhaft, wenn sich der fettere (bei Luftzufuhr) bzw. der reinere (bei AGR) Gemischanteil in Zylindermitte im Bereich einer zentral angeordneten Zündkerze befindet, während zur Zylinderwand hin eine Abmagerung des Gemisches bzw. eine Zunahme der Abgaskonzentration vorzufinden ist.

Aus der EP 0 764 773 A2 ist eine Brennkraftmaschine bekannt, bei der die Abgasrückführung in den Einlasssammler erfolgt. Dies hat allerdings den Nachteil, dass durch den Einlasssammler ein relativ großes Totvolumen gebildet wird. Durch die dämpfende Wirkung des Totvolumens ist die Reaktionszeit des Abgasrückführsystems relativ langsam, wodurch nur relativ niedrige Rückführraten im dynamischen Fahrbetrieb (im Vergleich zum Stationärbetrieb, wo das Totvolumen keine Rolle spielt) aus Fahrbarkeitsgründen möglich sind.

Andererseits ist aus der EP 0 764 773 A2 ein weiteres Abgasrückführsystem bekannt, bei dem die Abgasrückführung aus dem Auslasssystem direkt in einen von zwei Einlasskanälen pro Zylinder erfolgt. Bei dieser Ausführung können zwar große Totvolumina vermieden werden, allerdings ist eine gleichmäßige Rückführung des Abgases zu den einzelnen Zylindern nicht mehr gewährleistet.

Aus der GB 2 293 862 A ist eine fremdgezündete Brennkraftmaschine der eingangs genannten Art bekannt. Durch eine zusätzlich zum Einlasssammler vorgesehene Verteilerleiste kann eine gleichmäßigere Rückführung des Abgases bzw. eine gleichmäßigere Zuführung von Zusatzluft zu allen Zylindern erreicht werden. Infolge von Fertigungstoleranzen, Durchflussunterschieden oder unterschiedlichen Strömungswiderständen in den einzelnen Verteilerkanälen können aber trotzdem Unterschiede in der Zuteilung und der gleichmäßigen Verteilung der zugemessenen Abgas- bzw. Zusatzluftmengen auftreten.

Auch aus der WO 91/03634 A1 ist eine mehrzylindrige Brennkraftmaschine mit einer Abgasverteilerleiste bekannt, von der Verteilerkanäle zu den einzelnen Einlasskanälen führen. Auch hier kann es infolge von geringfügigen herstellungsbedingten Unterschieden zwischen den einzelnen Verteilerkanälen zu Differenzen in der Zuteilung des rückgeführten Abgases zu den einzelnen Zylindern kommen. Dies gilt auch für ähnliche, aus der EP 0 489 263 A2 oder der DE 40 27 963 C1 bekannte Abgasrückführsysteme.

Ferner ist aus der EP 0 473 931 A2 eine Brennkraftmaschine bekannt, bei der die zu den einzelnen Zylindern rückgeführte Abgasmenge durch Zugabe von zusätzlichem Verbrennungsgas gesteuert wird. Auch hier ist eine gleichmäßige Rückführung des Abgases zu den einzelnen Zylindern nicht gewährleistet.

Die DE 30 33 679 A1 beschreibt eine Vergaser-Brennkraftmaschine mit einem Ansaugkrümmer, von welchem Einlasskanäle zu den Zylindern ausgehen. Die Brennkraftmaschine weist eine Einrichtung zur Ladungsverdünnung auf, welche aus einem Nebenansaugweg mit einer Verteilerleiste besteht, über welche zusätzliche Luft jedem Zylinder zugeführt wird. Die Luftzuführung erfolgt durch eine von der Verteilerleiste ausgehenden Zweigleitung pro Zylinder, die jeweils in einer Strahldüse mit kleinem Durchmesser im Bereich des Ansaugventiles im Einlasskanal endet. Dadurch kann bei Vergasermotoren eine für alle Zylinder gleiche und hohe Ladungsverdünnung ermöglicht werden.

Die US 4,104,989 A zeigt eine fremdgezündete Vergaser-Brennkraftmaschine mit mehreren Zylindern, bei der Zusatzluft den Einlasskanälen zugeführt wird. Dadurch soll auf möglichst einfache Weise eine Ladungsschichtung erreicht werden. Auch hier kommt es durch die Drosselung der Ansaugströmung zu einem thermodynamischen Verlust, der den Kraftstoffverbrauch erhöht.

Aufgabe der Erfindung ist es, die genannten Nachteile zu vermeiden und bei einer Brennkraftmaschine der eingangs genannten Art Kraftstoffverbrauch und/oder Emissionen zu verringern, wobei eine für alle Zylinder möglichst gleiche und hohe Ladungsverdünnung ermöglicht werden soll. Insbesondere sollen bei Volllast hohe Drehmomente erzielbar sein.

Erfindungsgemäß wird dies dadurch erreicht, dass mehrere Einlasskanäle und zumindest ein Kraftstoff in die Einlasskanäle einspritzendes Einspritzventil pro Zylinder vorgesehen ist, dass das in die Einlasskanäle einspritzende Einspritzventil so angeordnet ist, dass die beiden Kraftstoffstrahlen dieses Einspritzventils durch eine definierte Öffnung zwischen den beiden Einlasskanälen hindurch auf Einlassöffnungen in den Brennraum gerichtet sind und dass die Mündung des Verteilerkanals in den Einlasskanal stromabwärts der Öffnung angeordnet ist. Zur Erzielung von hohen Drehmomenten ist bei Volllast eine Einspritzung in beide Einlasskanäle zur Homogenisierung des Gemisches wünschenswert. Eine stark ausgeprägte Schichtung im Brennraum ist dabei nicht erforderlich und auch nicht gewünscht. Die beiden durch eine definierte Öffnung zwischen den beiden Einlasskanälen hindurch auf Einlassöffnungen in den Brennraum gerichteten Kraftstoffstrahlen des Einspritzventiles ermöglichen solche hohen Vollastdrehmomente. Eine Brennkraftmaschine, bei der der Kraftstoff über ein Einspritzventil durch eine Öffnung zwischen zwei benachbarten Kanälen hindurch in beide Einlasskanäle eingespritzt wird, ist aus der AT 402 535 B bekannt.

Dadurch, dass die Mündung des Verteilerkanals in den Einlasskanal stromabwärts der Mündung des Einspritzventils angeordnet ist, wird der Kraftstoffstrahl möglichst wenig beeinflusst. Andererseits kann eine gezielte Beeinflussung des Kraftstoffstrahles manchmal auch durchaus erwünscht sein, beispielsweise um in bestimmten Betriebsbereichen den Auftreffort des Kraftstoffstrahles am Einlassventil oder im Brennraum zu verändern, oder aber auch, um den Kraftstoffstrahl zu stabilisieren und eine ungewünschte Ablenkung in Folge sich ändernder Strömungsgeschwindigkeiten im Einlasskanal zu verhindern. Um dies zu bewirken, ist in einer Ausführungsvariante vorgesehen, dass der Verteilerkanal so auf den Kraftstoffstrahl gerichtet ist, dass der Kraftstoffstrahl zumindest in einem Betriebsbereich der Brennkraftmaschine gezielt beeinflusst werden kann.

Ein Verblasen des Einspritzstrahles wird auch verhindert, wenn die Mündung des Verteilerkanals und die Mündung des Einspritzventiles so angeordnet sind, dass die Mittellinien des Kraftstoffstrahles und des Verteilerkanals voneinander beabstandet sind und sich nicht schneiden.

Durch die Drossel im Verteilerkanal wird erreicht, dass Fertigungstoleranzen, Durchflussunterschiede oder unterschiedliche Strömungswiderstände im Verteilerkanal keine Auswirkung auf die Zuteilung und Gleichverteilung des rückgeführten Abgases zu den Einzelkanälen haben. Bei drossellosen Verteilerkanälen besteht insbesondere bei Volllast über die Verteilerleiste eine Verbindung zwischen den Einlasskanälen verschiedener Zylinder. Dies kann bewirken, dass die für die Resonanzaufladung erforderliche Gasschwingung im Einlasssystem gestört wird. Durch die Drossel mit vordefiniertem Strömungsquerschnitt in den Verteilerkanälen wird diese Störung der Resonanzaufladung vermieden. Die Verteilerleiste selbst kann bezüglich der Größe von auftretenden Totvolumina minimiert werden. Bei einer als Abgasrückführsystem ausgebildeten Einrichtung zur Ladungsverdünnung wird dabei die Gasdynamik des rückgeführten Abgases nur unwesentlich gedämpft.

Dies ermöglicht im realen Fahrbetrieb hohe Abgasrückführraten bei magerem Betrieb ohne Fahrbarkeitseinbußen.

In einer einfachen und kostengünstigen Ausführungsvariante der Erfindung ist vorgesehen, dass die Einrichtung zur Ladungsverdünnung durch ein Abgasrückführsystem gebildet wird und die Zuführleitung direkt vom Auslasskanal eines Zylinders ausgeht.

Genauso ist es möglich, dass die Einrichtung zur Ladungsverdünnung durch ein Luftzuführsystem gebildet ist und die Zuführleitung für zusätzliche Luft von einer Luftansaug- oder Ladeluftleitung ausgeht.

Durch die Ausbildung der Luftzuführung bzw. Abgasrückführung in die Verteilerleiste werden gegenüber der bekannten Einleitung des Abgases in den Einlasssammler die Totvolumina um ein Vielfaches verkleinert. Da die Dämpfung eines großen Einlasssammlervolumens entfällt, werden an die Schnelligkeit eines in der Zuführleitung angeordneten Ventiles höhere Anforderungen gestellt. Um eine besonders schnelle und präzise Regelung der Luftzuführung bzw. der Abgasrückführung mit einem in der Zuführfeitung angeordneten Ventil zu ermöglichen, ist vorzugsweise vorgesehen, dass das Ventil eine Schrittmotorsteuerung aufweist.

Um eine gleichmäßige Verteilung der zugeführten Luft bzw. des rückgeführten Abgases zu den einzelnen Zylindern zu erreichen, mündet die Zuführleitung etwa mittig in die Verteilerleiste ein.

In einer sehr platzsparenden Ausführungsvariante ist dabei vorgesehen, dass die Verteilerleiste unterhalb der Einlasskanäle des Zylinderkopfes, also auf der der Kurbelwelle zugewandten Seite der Einlasskanäle, angeordnet ist. Besonders platzsparend ist es dabei, wenn das Ventil unterhalb der Verteilerleiste angeordnet ist.

Besonders hohe Luftzuführ- bzw. Abgasrückführraten lassen sich bei Brennkraftmaschinen mit zwei Einlasskanälen pro Zylinder erzielen, bei denen der eine Einlasskanal als Neutralkanal und der andere Einlasskanal als Tangentialkanal ausgebildet ist, wobei der Verteilerkanal in den Tangentialkanal einmündet und vorzugsweise eine Drosseleinrichtung im Neutralkanal angeordnet ist. Unter Tangentialkanal ist dabei ein Kanal zu verstehen, der eine tangential auf die Zylinderwand auftreffende Strömung erzeugt, die im Zylinder zur Ausbildung einer starken Drallbewegung, d. i. eine Rotation der Zylinderladung um die Zylinderachse führt. Er weist nur eine geringe Krümmung auf, und ist stark gegenüber der Ventilachse geneigt. Der Neutralkanal dagegen weist eine gegenüber dem Tangentialkanal größere Krümmung und eine geringere Neigung gegenüber der Ventilachse auf. Er erzeugt eine etwa auf die Zylindermitte gerichtete Einströmung, die weder eine ausgeprägte Drallströmung, noch eine Tumbleströmung, also eine Rotation um eine zur Kurbelwelle parallele Achse, hervorruft. Derartige Brennkraftmaschinen tolerieren auch hohe Luftzuführ- bzw. Abgasrückführmengen. Mit konventionellen Abgasrückführsystemen, bei denen das Abgas in den Einlasssammler rückgeführt wird, ist es allerdings nicht möglich, die hohen Abgasrückführraten dynamisch zu beherrschen. Dies ist mit einer separaten Verteilerleiste und den erfindungsgemäß ausgebildeten Verteilerkanälen möglich. Neben den sehr hohen Luftzufuhr- bzw. Abgasrückführraten hat diese Maßnahme den Vorteil, dass durch die Zuführung von Luft bzw. Abgas in den Tangentialkanal und die Abschaltung des Neutralkanales im Teillastbereich eine Schichtung im Brennraum erzielt werden kann. Die Frischluft bzw. das Abgas bleibt dabei bevorzugt in Zylinderwandnähe in Strömungsrichtung des Tangentialkanales und gelangt nicht zum Zündort. Am Zündort selbst befindet sich bevorzugt fettes (bei Luftzufuhr) bzw. reines (bei AGR) Kraftstoffgemisch.

Zur weiteren Reduzierung der Totvolumina kann in weiterer Ausbildung der Erfindung vorgesehen sein, dass die Verteilerleiste als kleinvolumiger Verteilerknoten ausgebildet ist, von dem spinnenartig die Verteilerkanäle zu den Einlasskanälen ausgehen.

Um eine gleichmäßige Aufteilung des Abgases auf alle Zylinder zu erreichen, ist es vorteilhaft, wenn alle Verteilerkanäle die gleiche Rohrlänge aufweisen.

Unter anderem durch die Luftzuführung bzw. Abgasrückführung in den Tangentialkanal kann durch die Öffnung in der Kanaltrennwand zwischen den beiden benachbarten Einlasskanälen eine Querströmung stattfinden, die zum Verblasen des Einspritzstrahles führt. Im Extremfall wird der Kraftstoffstrahl, der für den Tangentialkanal bestimmt ist, durch die Öffnung in den Neutralkanal eingespritzt. Um dies zu verhindern, ist es vorteilhaft, wenn die Drosseleinrichtung im geschlossenen Zustand einen definierten Mindestdurchfluss zwischen 5% und etwa 20%, vorzugsweise etwa 10% des maximalen Durchflusses erzeugt. Durch diese definierte Leckage wird erreicht, dass der Kraftstoffstrahl des Tangentialkanales auch in diesem verbleibt und beide Einspritzstrahlen die Wände der Einlasskanäle mit Kraftstoff nicht benetzen. Weiters ergibt sich durch die definierte Drosselung des etwa in die Zylindermitte gerichteten Neutralkanales ein fettes Gemisch und damit eine leichte Ladungsschichtung im Brennraum. Durch die definierte Drosselung wird die Strömung im Neutralkanal verlangsamt, aber nicht völlig unterbunden. Dadurch wird ein massives Aufbauen eines Kraftstoffwandfilmes zufolge der auch in den Neutralkanal erfolgenden Kraftstoffeinspritzung vermieden. Gleichzeitig wird die Strömung im Tangentialkanal beschleunigt, wodurch sich im Zylinder eine starke Drallströmung einstellt. Diese Drallströmung beschleunigt die Verbrennung, wodurch sich die Toleranz gegenüber der Abgasrückführung erhöht. Bei Einleitung des Abgases in den Tangentialkanal befördert der Drall das Abgas eher in Richtung Zylinderwand, als zur Zylindermitte. Es lässt sich somit eine leichte AGR-Schichtung erzielen. Zusätzlich lässt sich Abgas im Neutralkanal vermeiden. Dadurch erhöht sich die Zündwilligkeit des Gemisches im Neutralkanal und in weiterer Folge in Zündkerzennähe. Die erhöhte Toleranz gegenüber der Abgasrückführung erlaubt eine stärkere Entdrosselung des Motors mit Abgasrückführung bei Beibehaltung eines stöchiometrischen Luft-Kraftstoffverhältnisses. Die Abgasrückführung über eigene von einer gemeinsamen Verteilerleiste ausgehenden und zu den einzelnen Zylindern führenden Verteilerkanälen, welche jeweils eine Drossel mit vordefiniertem Strömungsquerschnitt aufweisen, hat gegenüber konventioneller Abgasrückführung in den Einlasssammler den Vorteil, dass sich sehr hohe Abgasrückführraten unter Vermeidung von Zündaussetzern oder Klopfen ermöglichen lassen.

Die Erfindung wird im folgenden anhand der Figuren näher erläutert.

Es zeigen in schematischer Darstellung:
- Fig. 1: ein Schaltbild einer erfindungsgemäßen Brennkraftmaschine,
- Fig. 2: ein Schaltbild einer anderen Ausführungsvariante der Erfindung,
- Fig. 3: einen Teilschnitt durch eine Brennkraftmaschine gemäß der Erfindung und
- Fig. 4: hierzu eine Draufsicht.

Funktionsgleiche Teile sind in den Ausführungsvarianten mit gleichen Bezugszeichen versehen.

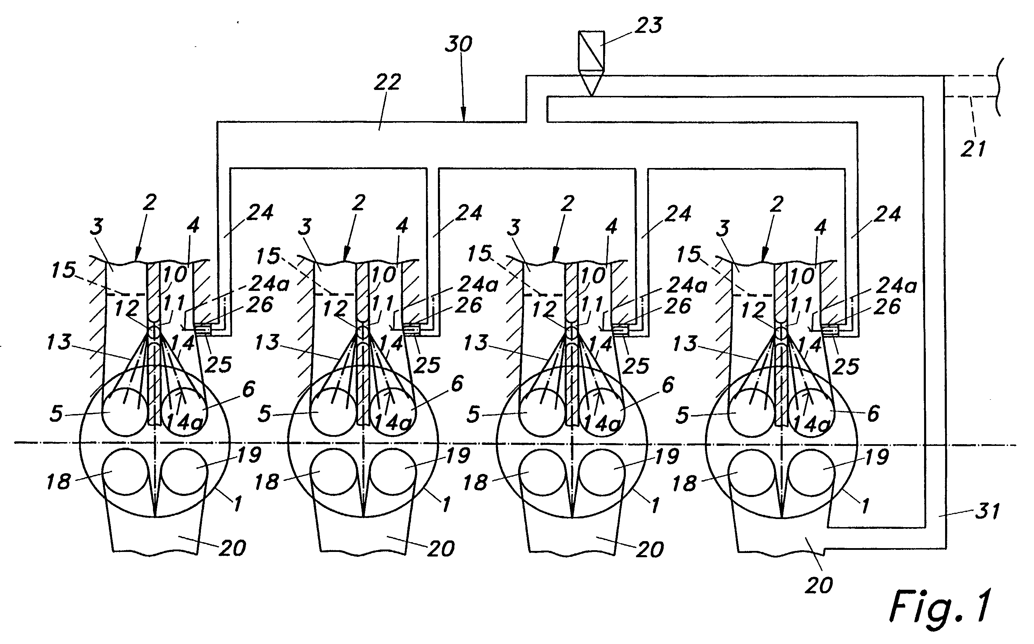

Die in den Fig. 1 bis 4 dargestellte Brennkraftmaschine weist ein Einlasssystem 2 mit zwei von einem nicht weiter dargestellten Einlasssammler ausgehenden Einlasskanälen pro Zylinder auf, von denen einer als Neutralkanal 3 und der andere als Tangentialkanal 4 ausgebildet ist. Der Neutralkanal 3 und der Tangentialkanal 4 mündet jeweils über eine Einlassöffnung 5, 6 in den Brennraum 7, wobei jede Einlassöffnung 5, 6 durch ein Einlassventil 8 gesteuert wird. Die Kanaltrennwand 10 zwischen dem Neutralkanal 3 und dem Tangentialkanal 4 weist nahe der Einlassöffnungen 5, 6 eine Öffnung 11 auf, welche den Neutralkanal 3 und den Tangentialkanal 4 miteinander verbindet. Im Bereich dieser Öffnung 11 zwischen den beiden Einlasskanälen 3, 4 ist ein Einspritzventil 12 vorgesehen, welches zu den zwei Einlasskanälen 3, 4 so angeordnet ist, dass in jeden der beiden Einlasskanäle 3, 4 ein Kraftstoffstrahl 13, 14 durch die definierte Öffnung 11 hindurch in Richtung der Einlassöffnung 5, 6 eingespritzt wird.

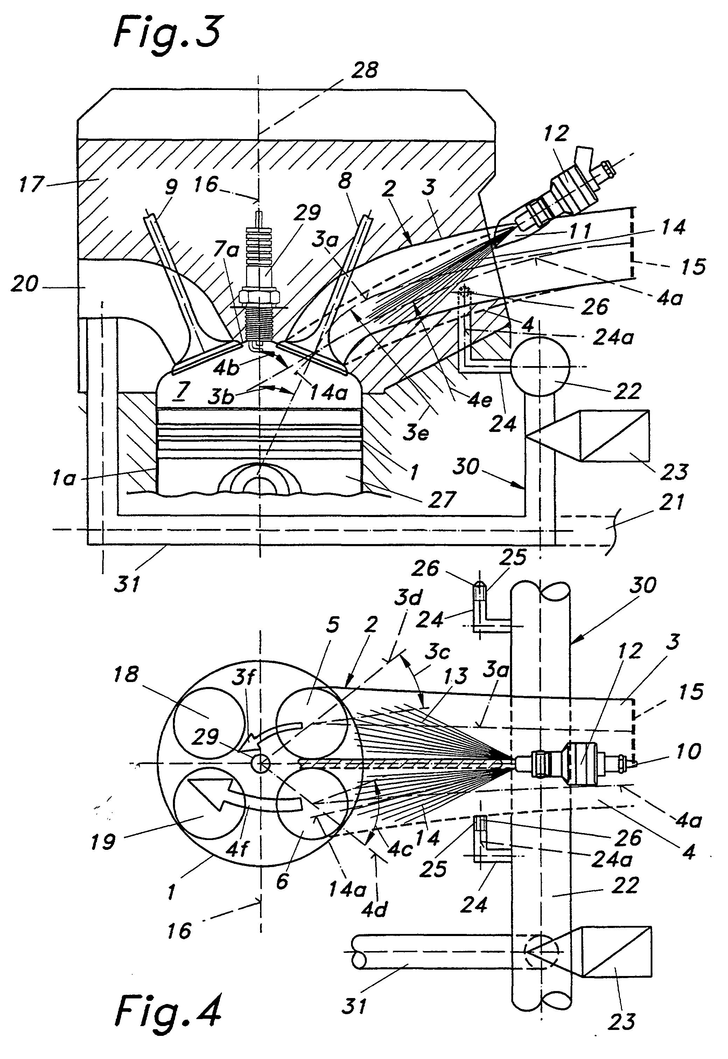

Wie der Fig. 3 zu entnehmen ist, schließt die Mittellinie 4a des Tangentialkanales 4 unmittelbar im Bereich der Einlassöffnung 6 mit der durch die Zylinderachsen 28 aufgespannten Motorlängsebene 16 einen größeren Winkel 4b ein, als die Mittellinie 3a des Neutralkanales 3. Der Winkel zwischen der Mittellinie 3a des Neutralkanales 3 und der Motorlängseben 16 ist mit 3b bezeichnet. Weiters schließt die Mittellinie 4a des Tangentialkanales 4 im Bereich der Einlassöffnung 6 mit einer die Zylinderachse 28 und die Mitte der Einlassöffnung 6 einschließenden Ebene 4d einen größeren Winkel 4c ein, als die Mittellinie 3a des Neutralkanales 3, wobei mit 3c der Winkel zwischen der entsprechenden zweiten Ebene 3d und der Mittellinie 3a bezeichnet ist. Weiters weist die Mittellinie 4a des Tangentialkanales 4 im Bereich der Einlassöffnung 6 einen größeren Krümmungsradius 4e auf, als die Mittellinie 3a des Neutralkanales 3 im Bereich der Einlassöffnung 5. Der entsprechende Krümmungsradius der Mittellinie 3a ist mit 3e bezeichnet. Dadurch erzeugt der Neutralkanal 3 eine etwa auf die Zylindermitte gerichtete Einströmung, die weder eine ausgeprägte Drallbewegung noch eine Tumblebewegung hervorruft. Der Tangentialkanal 4 hingegen erzeugt eine tangential auf die Zylinderwand 1a auftreffende Strömung, die im Zylinder 1 zur Ausbildung einer starken Drallbewegung führt. Die durch den Neutralkanal 3 bzw. den Tangentialkanal 4 erzeugten Strömungen im Zylinder 1 sind in Fig. 4 durch die Pfeile 3fbzw. 4f angedeutet.

Im Neutralkanal 3 ist stromaufwärts der Öffnung 11 eine Drosseleinrichtung 15, beispielsweise eine Drosselklappe oder ein Drosselschieber, angeordnet, welche im geschlossenen Zustand einen Mindestdurchfluß zwischen 5% und etwa 20%, beispielsweise von 10% des Maximaldurchflusses durch den Neutralkanal 3, ermöglicht.

Auf der der Einlaßseite bezüglich der Motorlängsebene 16 gegenüberliegenden Seite sind in der durch den Zylinderkopf 17 gebildeten dachförmigen Brennraumdecke 7a zwei Auslaßöffnungen 18, 19 angeordnet, welche über Auslaßventile 9 gesteuert werden. Von den Auslaßöffnungen 18, 19 gehen Auslaßkanäle 20 eines nicht weiter dargestellten Auslaßsystems aus.

Die Brennkraftmaschine weist eine Einrichtung 30 zur Ladungsverdünnung auf, welche in den Fig. 1 bis 4 als Abgasrückführsystem in voll gezeichneten Linien dargestellt ist. Von zumindest einem Auslaßkanal 20 zweigt dabei eine Zuführleitung 31 ab, die etwa mittig in eine Verteilerleiste 22 einmündet. Die Verteilerleiste 22 kann dabei in platzsparender Weise unterhalb der Einlaßkanäle 3,4, also an der der Kurbelwelle zugewandten Seite der Einlaßkanäle 3, 4, angeordnet sein.

Die Einrichtung 30 kann aber alternativ dazu auch durch ein Luftzuführsystem gebildet sein, welches über eine Zuführleitung 21 reine Luft der Verteilerleiste 22 zuführt, wie in den Figuren durch strichlierte Linien angedeutet ist. Die Zuführleitung 21 geht dabei nicht vom Auslaßsystem, sondern von einer nicht weiter dargestellten Luftansaug- bzw. Ladeluftleitung stromabwärts eines Luftfilters aus. Die anderen erfindungswesentlichen Merkmale sind die gleichen, wie bei der als Abgasrückführsystem ausgeführten Einrichtung 30.

Zur Steuerung der zugeführten Luft- bzw. der rückgeführten Abgasmenge ist in der Zuführleitung 21 bzw. 31 ein Ventil 23 vorgesehen, welches mit einem Schrittmotor ausgestattet ist, um eine schnelle und präzise Regelung zu erreichen.

Die Verteilerleiste 22 ist über Verteilerkanäle 24 mit dem als Tangentialkanal 4 jedes Zylinders 1 verbunden. Die Mündung 26 jedes Verteilerkanals 24 in einen Tangentialkanal 4 liegt dabei stromabwärts der Öffnung 11 und ist so angeordnet, daß die Mittellinie 14a des Kraftstoffstrahles 14 von der über die Mündung 26 hinaus verlängerte Mittellinie 24a des Verteilerkanales 24 beabstandet ist. Dadurch wird eine nachteilige Beeinflussung des Kraftstoffstrahles 14 durch die über den Verteilerkanal 24 zugeführte Luft bzw. das rückgeführte Abgas vermieden.

Es ist aber auch möglich, die Beeinflussung des Kraftstoffstrahles 14 durch die über den Verteilerkanal 24 zugeführte Luft bzw. das rückgeführte Abgas gezielt und mit Vorteil einzusetzen, beispielsweise um den Kraftstoffstrahl 14 zu stabilisieren und einen nachteiligen Effekt von in unterschiedlichem Maße ablenkend wirkenden verschiedenen Strömungsgeschwinschwindigkeiten im Tangentialkanal 4 zu kompensieren. In anderen Fällen kann es gewünscht sein, den Auftreffort des Kraftstoffstrahles 14 am Einlaßventil 8 oder im Brennraum 7 in Abhängigkeit von Motorbetriebsparametern zu variieren. Um den Kraftstoffstrahl 14 solcher Art gezielt ablenken zu können, ist der Verteilerkanal 24 im Bereich der Mündung 26 mehr oder weniger stark auf den Kraftstoffstrahl 14 gerichtet.

Der Brennraum 7 wird durch einen Kolben 27 und die dachförmige Brennraumdecke 7a begrenzt. Im Bereich der Zylinderachse 28 ist eine zentral angeordnete Zündkerze 29 vorgesehen. Es können aber auch mehrere Zündkerzen pro Zylinder vorgesehen sein.

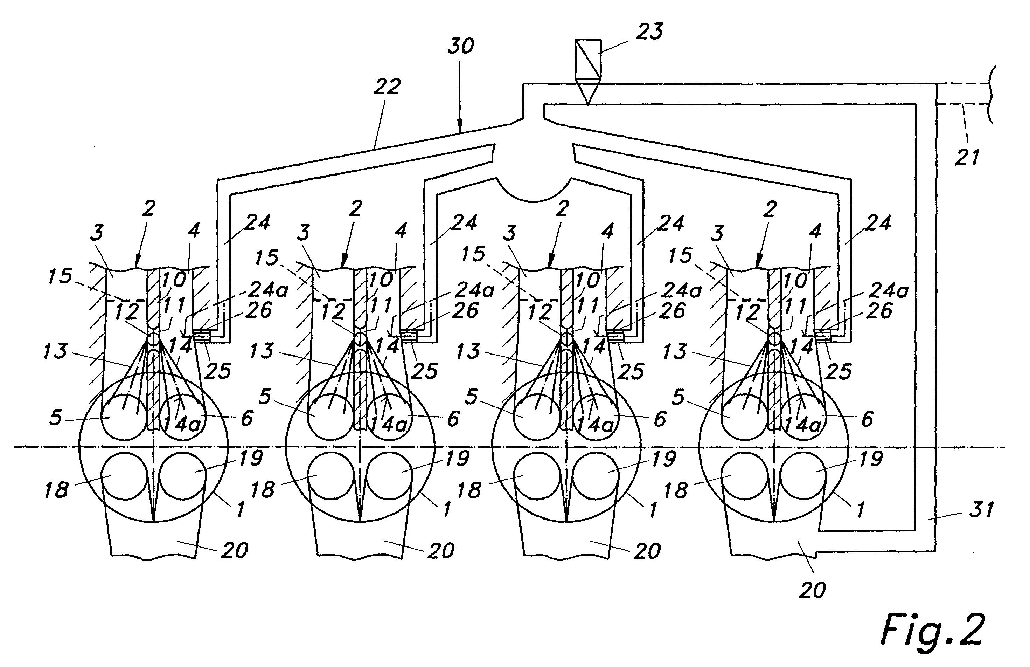

Die Drosseleinrichtung 15 kann als einfache Kanalabschaltvorrichtung mit nur zwei Stellungen, nämlich einer Öffnungs- und einer Schließstellung ausgebildet sein. Im Teillastbereich wird die Drosseleinrichtung 15 geschlossen, wodurch sich im Zylinder 1 eine starke Drallströmung ausbildet. Durch diese Abschaltung des Neutralkanales 3 und den dadurch erzeugten Drall im Zylinder 1 wird es möglich, daß von der Brennkraftmaschine hohe Luftzuführ- bzw. Abgasrückführraten toleriert werden. Hohe Luftzuführ- bzw. Abgasrückführraten sind dynamisch aber nur beherrschbar, wenn die Einrichtung 30 zur Ladungsverdünnung sehr schnell arbeitet und geringe Totvolumina aufweist, da bei großen Totvolumina die Reaktionszeit der Einrichtung 30 wegen der hohen Dämpfung zu langsam ist. Die Verteilerleiste 22 weist ein im Vergleich zum Einlaßsammler viel geringeres Volumen auf, wodurch das Totvolumen entscheidend verkleinert werden kann. Fig. 2 zeigt dazu eine Ausführung mit einer als kleinvolumiger Verteilerknoten ausgeführten Verteilerleiste 22, welche ein besonders kleines Totvolumen aufweist. Der Verteilerknoten ist dabei so klein wie möglich ausgeführt, wobei die Mindestgröße im wesentlichen nur von der Anzahl und dem Querschnitt der Verteilerkanäle 24 bestimmt wird.

Die wegfallende Dämpfung des Einlaßsammlers ermöglicht eine schnellere Reaktionszeit der Einrichtung 30, was eine schnelle und präzise Regelung durch das Ventil 23 notwendig macht. Durch ein über einen Schrittmotor gesteuertes Ventil 23 kann erreicht werden, daß das Ventil 23 gleich schnell geschlossen wird, wie eine - nicht weiter dargestellte - Drosselklappe. Dadurch wird beispielsweise bei einem Abgasrückführsystem verhindert, daß bei schnellem Schließen der Drosselklappe reines Abgas durch die Einrichtung 30 in den Brennraum 7 angesaugt wird.

Durch die Abschaltung des Neutralkanales 3 und die Zuführung von Frischluft bzw. Abgas in den Tangentialkanal 4 ist es möglich, eine gewisse Schichtung von Kraftstoff im Brennraum 7 zu erzielen. Durch die Zuführung der Luft bzw. des Abgases in den Tangentialkanal 4 wird diese Schichtung noch unterstützt. Die reine Luft bzw. das Abgas bleibt dabei bevorzugt in der Nähe der Zylinderwand 1a und wird von der Zündkerze 29 im Bereich der Zylinderachse 28 ferngehalten, wo sich bevorzugt das fette bzw. reine (abgasfreie) Kraftstoffgemisch befindet. Im Gegensatz zum Teillastbetrieb ist bei Vollast keine Schichtung sondern eine Homogenisierung des Gemisches im Zylinder 1 erwünscht, wobei zur Erzielung hoher Drehmomente Kraftstoff in beide Einlaßkanäle 3, 4 eingespritzt wird. Um eine Einspritzung in beide Einlaßkanäle 3, 4 mit einem zweistrahligen Einspritzventil 12 zu ermöglichen, ist - wie bereits erwähnt - in der Kanaltrennwand 10 die fensterähnliche Öffnung 11 zwischen Neutralkanal 3 und Tangentialkanal 4 vorgesehen. Durch diese Öffnung 11 kann aber eine Querströmung stattfinden, die zu einem Verblasen des in den Tangentialkanal 4 eingespritzten Kraftstoffstrahles 14 führt, wobei im Extremfall der für den Tangentialkanal 4 bestimmte Kraftstoffstrahl 14 in den Neutralkanal 3 eingespritzt wird. Um dies zu vermeiden, wird in der Drosseleinrichtung 15 eine definierte Leckage im geschlossenen Zustand zugelassen, welche so abgestimmt ist, daß der für den Tangentialkanal 4 bestimmte Kraftstoffstrahl 14 auch in diesem verbleibt und beide Einspritzstrahlen 13, 14 nicht die Wände der Einlaßkanäle 3, 4 mit Kraftstoff benetzen.

Insbesondere bei Vollast erzeugen die Verteilerkanäle 24 zwischen Verteilerleiste 22 und den Tangentialkanälen 4 eine Verbindung zwischen den Einlaßkanälen 3, 4, wodurch die für eine Resonanzaufladung erforderliche Gasschwingung im Einlaßsystem 2 gestört sein kann. Um eine derartige Störung zu vermeiden, weisen die Verteilerkanäle 24 Drosseln 25 mit genau definiertem Querschnitt auf. Abgesehen davon ermöglichen die Drosseln 25 durch den präzise definierten Zuströmungsquerschnitt insbesondere im Teillastbereich eine gleiche Zuteilung der Luft bzw. des Abgases zu den einzelnen Zylindern 1.

## Patentansprüche

1. Fremdgezündete Brennkraftmaschine mit mehreren Zylindern (1), mit einem Auslasssystem und einem Einlasssystem (2) mit mindestens einem von einem Einlasssammler ausgehenden Einlasskanal (3, 4) pro Zylinder (1), und einer Einrichtung (30) zur Ladungsverdünnung mit zumindest einer zum Einlasssystem (2) führenden Zuführleitung (21, 31) für Luft und/oder rückgeführtes Abgas, wobei die Einrichtung (30) zur Ladungsverdünnung eine für alle Zylinder (1) einer Reihe gemeinsame Verteilerleiste (22) aufweist, in welche die Zuführleitung (21, 31), vorzugsweise etwa mittig, einmündet und welche über zumindest einen Verteilerkanal (24) pro Zylinder (1) mit dem Einlasskanal (3, 4) strömungsverbindbar ist, wobei der Verteilerkanal (24) eine Drossel (25) mit vordefinierten Strömungsquerschnitt aufweist, **dadurch gekennzeichnet,** dass mehrere Einlasskanäle und zumindest ein Kraftstoff in die Einlasskanäle (3, 4) einspritzendes Einspritzventil (12) pro Zylinder (1) vorgesehen ist, dass das in die Einlasskanäle (3, 4) einspritzende Einspritzventil (12) so angeordnet ist, dass die beiden Kraftstoffstrahlen (13, 14) dieses Einspritzventils (12) durch eine definierte Öffnung (11) zwischen den beiden Einlasskanälen (3, 4) hindurch auf Einlassöffnungen (5, 6) in den Brennraum (7) gerichtet sind und dass die Mündung (26) des Verteilerkanals (24) in den Einlasskanal (4) stromabwärts der Öffnung (11) angeordnet ist.

2. Brennkraftmaschine nach Anspruch 1, **dadurch gekennzeichnet,** dass der Verteilerkanal (24) so auf den Kraftstoffstrahl (14) gerichtet ist, dass der Kraftstoffstrahl (14) zumindest in einem Betriebsbereich der Brennkraftmaschine gezielt beeinflussbar ist.

3. Brennkraftmaschine nach Anspruch 1, **dadurch gekennzeichnet,** dass der Verteilerkanal (24) so angeordnet ist, dass die Mittellinien (24a, 14a) des Verteilerkanals (24) und des Kraftstoffstrahles (14) voneinander beabstandet sind.

4. Fremdgezündete Brennkraftmaschine mit mehreren Zylindern (1), mit einem Auslasssystem und einem Einlasssystem (2) mit mindestens einem von einem Einlasssammler ausgehenden Einlasskanal (3, 4) pro Zylinder (1), und einer Einrichtung (30) zur Ladungsverdünnung mit zumindest einer zum Einlasssystem (2) führenden Zuführleitung (21, 31) für Luft und/oder rückgeführtes Abgas, wobei die Einrichtung (30) zur Ladungsverdünnung eine für alle Zylinder (1) einer Reihe gemeinsame Verteilerleiste (22) aufweist, in welche die Zuführleitung (21, 31), vorzugsweise etwa mittig, einmündet und welche über zumindest einen Verteilerkanal (24) pro Zylinder (1) mit dem Einlasskanal (3, 4) strömungsverbindbar ist, wobei der Verteilerkanal (24) eine Drossel (25) mit vordefinierten Strömungsquerschnitt aufweist, **dadurch gekennzeichnet,** dass mehrere Einlasskanäle und zumindest ein Kraftstoff in die Einlasskanäle (3, 4) einspritzendes Einspritzventil (12) pro Zylinder (1) vorgesehen ist, dass das in die Einlasskanäle (3, 4) einspritzende Einspritzventil (12) so angeordnet ist, dass die beiden Kraftstoffstrahlen (13, 14) dieses Einspritzventils (12) durch eine definierte Öffnung (11) zwischen den beiden Einlasskanälen (3, 4) hindurch auf Einlassöffnungen (5, 6) in den Brennraum (7) gerichtet sind und dass der Verteilerkanal (24) so angeordnet ist, dass die Mittellinien (24a, 14a) des Verteilerkanals (24) und des Kraftstoffstrahles (14) voneinander beabstandet sind.

5. Brennkraftmaschine nach einem der Ansprüche 1 bis 4, **dadurch gekennzeichnet,** dass die Einrichtung (30) zur Ladungsverdünnung durch ein Abgasrückführsystem gebildet ist und die Zuführleitung (31) zur Rückführung von Abgas vom Auslasssystem, vorzugsweise direkt vom Auslasskanal (20) eines Zylinders (1) ausgeht.

6. Brennkraftmaschine nach einem der Ansprüche 1 bis 5 mit einem Ventil (23) in der Zuführleitung (21, 31), **dadurch gekennzeichnet,** dass das Ventil (23) eine Schrittmotorsteuerung aufweist.

7. Brennkraftmaschine nach einem der Ansprüche 1 bis 6, **dadurch gekennzeichnet,** dass die Verteilerleiste (22) unterhalb der Einlasskanäle (3, 4) des Zylinderkopfes (1) also auf der der Kurbelwelle zugewandten Seite der Einlasskanäle (3, 4), angeordnet ist.

8. Brennkraftmaschine nach einem der Ansprüche 1 bis 7, **dadurch gekennzeichnet,** dass das Ventil (23) unterhalb der Verteilerleiste (22), also auf der der Kurbelwelle zugewandten Seite der Verteilerleiste (22), angeordnet ist.

9. Brennkraftmaschine nach einem der Ansprüche 1 bis 8, **dadurch gekennzeichnet,** dass zwei Einlasskanälen (3, 4), pro Zylinder (1) vorgesehen sind, wobei in dem einen Einlasskanal (3) vorzugsweise eine Drosseleinrichtung (15) angeordnet ist und dass der eine Einlasskanal (3) als Neutralkanal und der andere Einlasskanal (4) als Tangentialkanal ausgebildet ist, wobei der Verteilerkanal (24) in den Tangentialkanal (4) einmündet und vorzugsweise die Drosseleinrichtung (15) im Neutralkanal (3) angeordnet ist.

10. Brennkraftmaschine nach einem der Ansprüche 1 bis 9, **dadurch gekennzeichnet,** dass die Verteilerleister (22) als kleinvolumiger Verteilerknoten ausgebildet ist, von dem spinnenartig die Verteilerkanäle (24) zu den Einlasskanälen (4) ausgehen, wobei vorzugsweise alle Verteilerkanäle (24) die gleiche Rohrlänge aufweisen.

11. Brennkraftmaschine nach einem der Ansprüche 1 bis 10, **dadurch gekennzeichnet,** dass die Drosseleinrichtung (15) im geschlossenen Zustand einen definierten Mindestdurchfluss zwischen 5 % und etwa 20 %, vorzugsweise etwa 10 % des Maximaldurchflusses erzeugt.

12. Brennkraftmaschine nach einem der Ansprüche 4 bis 11, **dadurch gekennzeichnet,** dass die Mündung (26) des Verteilerkanals (24) in den Einlasskanal (4) stromabwärts der Öffnung (11) angeordnet ist.

## Claims

1. A spark-ignition, internal combustion engine comprising several cylinders (1), and an exhaust system and an intake system (2) with one or more intake ports (3, 4) per cylinder (1) connected to an intake manifold, and a device (30) for charge dilution with at least one supply line (21, 31) delivering air and/or recirculated exhaust gas to the intake system (2), said device (30) for charge dilution being provided with a distributor rail (22) for each bank of cylinders (1), into which the supply line (21, 31) opens, preferably approximately in the middle, and which can be flow-connected with the intake port (3, 4) via at least one branch pipe (24) per cylinder (1), said branch pipe (24) including a throttle (25) with predefined flow cross-section, **characterized in that** several intake ports are provided in addition to at least one fuel injector (12) per cylinder (1) for fuel injection into said intake ports (3, 4), and that the fuel injector (12) injecting fuel into said intake ports (3, 4) is . positioned such that the two fuel jets (13, 14) of said injector (12) are directed through a defined opening (11) between the two intake ports (3, 4) onto inlet openings (5, 6) into the combustion chamber (7), and that the end (26) of the branch pipe (24). opening into the intake port (4) is located downstream of the opening (11).

2. An internal combustion engine according to claim 1, **characterized in that** the branch pipe (24) is directed onto the fuel jet (14) so as to permit control of the fuel jet (14) at least in one operating range of the engine.

3. An internal combustion engine according to claim 1, **characterized in that** the branch pipe (24) is positioned such that the centre lines (24a, 14a) of the branch pipe (24) and the fuel jet (14) are located at a distance from each other.

4. A spark-ignition, internal combustion engine comprising several cylinders (1), and an exhaust system and an intake system (2) with one or more intake ports (3, 4) per cylinder (1) connected to an intake manifold, and a device (30) for charge dilution with at least one supply line (21, 31) delivering air and/or recirculated exhaust gas to the intake system (2), said device (30) for charge dilution being provided with a distributor rail (22) for each bank of cylinders (1), into which the supply line (21, 31) opens, preferably approximately in the middle, and which can be flow-connected with the intake port (3, 4) via at least one branch pipe (24) per cylinder (1), said branch pipe (24) including a throttle (25) with predefined flow cross-section, **characterized in that** several intake ports are provided in addition to at least one fuel injector (12) per cylinder (1) for fuel injection into said intake ports (3, 4), and that the fuel injector (12) injecting fuel into said intake ports (3, 4) is positioned such that the two fuel jets (13, 14) of said injector (12) are directed through a defined opening (11) between the two intake ports (3, 4) onto inlet openings (5, 6) into the combustion chamber (7), and that the branch pipe (24) is positioned such that the centre lines (24a, 14a) of the branch pipe (24) and the fuel jet (14) are located at a distance from each other.

5. An internal combustion engine according to any of claims 1 to 4, **characterized in that** the device (30) for charge dilution is constituted by an exhaust gas recirculation system, and that the supply line (31) for exhaust gas recirculation branches off from the exhaust system, i.e., preferably directly from the exhaust port (20) of a cylinder (1).

6. An internal combustion engine according to any of claims 1 to 5, with a valve (23) in the supply line (21, 31), **characterized in that** the valve (23) is controlled by a stepper motor. .

7. An internal combustion engine according to any of claims 1 to 6, **characterized in that** the distributor rail (22) is positioned below the intake ports (3, 4) of the cylinder head (1), i.e., on the side of the intake ports (3, 4) facing the crankshaft.

8. An internal combustion engine according to any of claims 1 to 7, **characterized in that** the valve (23) is positioned below the distributor rail (22), i.e., on the side of the distributor rail (22) facing the crankshaft.

9. An internal combustion engine according to any of claims 1 to 8, **characterized in that** two intake ports (3, 4) are provided per cylinder (1), one of said intake ports (3) preferably containing a throttle device (15), and that the one intake port (3) is configured as neutral port and the other intake port (4) is configured as tangential port, the branch pipe (24) opening into the tangential port (4) and the throttle device (15) preferably being positioned in the neutral port (3).

10. An internal combustion engine according to any of claims 1 to 9, **characterized in that** the distributor rail (22) is configured as a small-volume junction, from which the branch pipes (24) lead to the intake ports (4) in spiderlike fashion, all branch pipes (24) preferably having the same length.

11. An internal combustion engine according to any of claims 1 to 10, **characterized in that** the throttle device (15) in its closed state will produce a defined minimum flow of about 5% to 20%, and preferably about 10%, of maximum flow. .

12. An internal combustion engine according to any of claims 4 to 11, **characterized in that** the end (26) of the branch pipe (24) opening into the intake port (4) is located downstream of opening (11).

## Revendications

1. Moteur à combustion interne à allumage commandé, comportant plusieurs cylindres (1), avec un système d'échappement et un système d'admission (2), ayant au moins un canal d'admission (3, 4) par cylindre (1), partant d'un collecteur d'admission, et avec un dispositif (30) pour effectuer la dilution de la charge avec au moins une conduite d'amenée (21, 31), menant au système d'admission (2), pour l'air et/ou les gaz d'échappement recirculés, le dispositif (30) de dilution de la charge présentant un tronçon de distribution (22) commun à tous les cylindres (1) d'une rangée, tronçon dans lequel la conduite d'amenée (21, 31) débouche, de préférence à peu près centralement, et qui est susceptible d'être relié en écoulement au canal d'admission (3, 4), par au moins un canal distributeur (24) par cylindre (1), le canal distributeur (24) présentant un dispositif d'étranglement (25) à section transversale d'écoulement prédéfinie, caractérisé par le fait que plusieurs canaux d'admission et au moins un injecteur (12), injectant du carburant dans les canaux d'admission (3, 4), sont prévus par cylindre (1), par le fait que l'injecteur (12) injectant dans les canaux d'admission (3, 4) est disposé de manière que les deux jets de carburant (13, 14) de cet injecteur (12) soient orientés, en passant par une ouverture (11) définie, ménagée entre les deux canaux d'admission (3, 4), en étant dirigés vers des ouvertures d'admission (5, 6) ménagées dans la chambre de combustion (7), et par le fait que l'embouchure (26) du canal distributeur (24) est disposée dans le canal d'admission (4), en aval de l'ouverture (11)

2. Moteur à combustion interne selon la revendication 1, caractérisé par le fait que le canal distributeur (24) est orienté sur le jet de carburant (14), de manière que le jet de carburant (14) puisse être influencé à dessein au moins dans une plage de fonctionnement du moteur à combustion interne.

3. Moteur à combustion interne selon la revendication 1, caractérisé par le fait que le canal distributeur (24) est disposé de manière que les axes (24a, 14a) du canal distributeur (24) et du jet de carburant (14) soient espacés l'un de l'autre.

4. Moteur à combustion interne à allumage commandé, comportant plusieurs cylindres (1), avec un système d'échappement et un système d'admission (2), ayant au moins un canal d'admission (3, 4), partant d'un collecteur d'admission, par cylindre (1), et un dispositif (30) pour effectuer la dilution de la charge avec au moins une conduite d'amenée (21, 31), menant au système d'admission (2), pour l'air et/ou les gaz d'échappement recirculés, le dispositif (30) de dilution de la charge présentant un tronçon de distribution (22) commun à tous les cylindres (1) d'une rangée, tronçon dans lequel la conduite d'amenée (21, 31) débouche, de préférence à peu près centralement, et qui est susceptible d'être reliée en écoulement au canal d'admission (3, 4), par au moins un canal distributeur (24) par . cylindre (1), le canal distributeur (24) présentant un élément d'étranglement (25) à section transversale d'écoulement prédéfinie, caractérisé par le fait que plusieurs canaux d'admission et au moins un injecteur (12), injectant du carburant dans les canaux d'admission (3, 4), sont prévus par cylindre (1), par le fait que l'injecteur (12) injectant dans les canaux d'admission (3, 4) est disposé de manière que les deux jets de carburant (13, 14) de cet injecteur (12) soient orientés, en passant par une ouverture (11) définie, ménagée entre les deux canaux d'admission (3, 4), en étant dirigés vers des ouvertures d'admission (5, 6) ménagées dans la chambre de combustion (7), et par le fait que le canal distributeur (24) est disposé dans la chambre de combustion (7) n'étant dirigé vers des ouvertures d'admission (5, 6) ménagées dans la chambre de combustion (7) et par le fait que le canal distributeur (24) est disposé de manière que les axes (24a, 14a), du canal distributeur (24) et du jet de carburant (14), soient espacés l'un de l'autre.

5. Moteur à combustion interne selon l'une des revendications 1 à 4, caractérisé par le fait que le. dispositif (30) de dilution de la charge est constitué d'un système de recirculation des gaz d'échappement et la conduite d'amenée (31), prévue pour recirculer des gaz d'échappement venant du système d'échappement, part, de préférence directement, du canal d'échappement (20) d'un cylindre (1).

6. Moteur à combustion interne selon l'une des revendications 1 1 à 5, muni d'une soupape (23) montée dans la conduite d'amenée (21, 31), caractérisé par le fait que la soupape (23) présente une commande à moteur à combustion interne pas à pas.

7. Moteur à combustion interne selon l'une des revendications 1 à 6, caractérisé par le fait que le tronçon distributeur (22) est disposé au-dessous des canaux d'admission (3, 4) de la culasse (1), donc du côté des canaux d'admission (3, 4) qui est tourné vers le vilebrequin.

8. Moteur à combustion interne selon l'une des revendications 1 1 à 7, caractérisé par le fait que la soupape (23) est disposée au-dessous du tronçon distributeur (22), donc du côté du tronçon distributeur (22) qui est tourné vers le vilebrequin.

9. Moteur à combustion interne selon l'une des revendications 1 à 8, caractérisé par le fait que deux canaux d'admission (3, 4) sont prévus par cylindre (1), dans un premier canal d'admission (3) étant ménagé, de préférence, un dispositif d'étranglement (15), et par le fait que le premier canal d'admission (3) est réalisé en tant que canal neutre, et l'autre canal d'admission (4) en tant que canal tangentiel, le canal distributeur (24) débouchant dans le canal tangentiel (4) et, de préférence, le dispositif d'étranglement (15) étant disposé dans le canal neutre (3) .

10. Moteur à combustion interne selon l'une des revendication 1 à 9, caractérisé par le fait que les tronçons distributeurs (22) sont réalisés sous la forme de noeuds de distributeur de petit volume, d'où partent, à la façon d'une toile d'araignée, les canaux distributeurs (24) allant aux canaux d'admission (4), de préférence tous les canaux distributeurs (24) présentant la même longueur tubulaire.

11. Moteur à combustion interne selon l'une des revendications à 10, caractérisé par le fait que le dispositif d'étranglement (15) génère, à l'état fermé, un débit minimal défini compris entre 5 % et environ 20 %, de préférence d'environ 10 % du débit maximal.

12. Moteur à combustion interne selon l'une des revendications 4 à 11, caractérisé par le fait que l'embouchure (26) du canal distributeur (24) est disposée dans le canal d'admission (4), en aval de l'ouverture (11).
